Europäisches Patentamt

European Patent Office

Office européen des brevets

(19)

(11) Veröffentlichungsnummer: **0 472 068 A1**

# EUROPÄISCHE PATENTANMELDUNG

(12)

(21) Anmeldenummer: **91113419.5**

(22) Anmeldetag: **09.08.91**

(51) Int. Cl.5: **D01H 11/00**, D01H 5/66

(30) Priorität: **21.08.90 CH 2702/90**

(43) Veröffentlichungstag der Anmeldung:
**26.02.92 Patentblatt 92/09**

(84) Benannte Vertragsstaaten:
**CH DE ES IT LI**

(71) Anmelder: **MASCHINENFABRIK RIETER AG**

CH-8406 Winterthur(CH)

(72) Erfinder: **Wolf, Horst**
**Rigistrasse 8**
**W-8185 Winkel b. Bülach(DE)**
Erfinder: **Lattion, André**
**Gotthelfstrasse 51**
**CH-8472 Seuzach(CH)**

(54) **Ringspinn- oder Zwirnmaschine mit Absaugeinrichtung.**

(57) Die Ringspinn- oder Zwirnmaschine besitzt eine Absaugvorrichtung, welche verwertbare, aus dem Streckwerk stammende Materialien über einen Abluftkanal 11 abführt und in einem Filter 23 sammelt, während nicht wiederverwertbare Materialien über den Kanal 21 in einen Filter 25 gelangen. Wiederverwertbare Materialien können damit dem Produktionsprozess neu wieder zugeführt werden, ohne dass zusätzlicher Aufwand vorgenommen werden muss.

FIG. 1

Die vorliegende Erfindung betrifft eine Ringspinn- oder Zwirnmaschine gemäss Oberbegriff von Anspruch 1.

Solche Maschinen befinden sich in stetiger Entwicklung; so soll zB durch die Steigerung der Spindelwellendrehzahl oder durch eine Senkung des Wartungsaufwands die Produktivität der Maschine gesteigert werden, was bedeutet, dass die Kosten pro Einheit des herzustellenden Guts sinken.

GB PS 982.604 zeigt nun eine Absaugvorrichtung an einer Maschine der genannten Art, welche auf jede der gekapselten Fadenführungseinrichtungen wirkt und so insbesondere Staub, Faserabrieb und zB beim Doffen anfallende, im Spinnbereich verbleibende Fadenreste entfernt. Dadurch wird ein störungsfreier Betrieb unterstützt und so der notwendige Wartungsaufwand verringert.

Weiter sind Spinn- oder Zwirnmaschinen bekannt, bei welchen die Absaugvorrichtung auch auf das Streckwerk wirkt und so die dort anfallenden Fasern ebenfalls abführt. Die die genannten Fremdstoffe tragende Abluft strömt auf breitem Querschnitt durch ein umlaufendes Filterband, welches seinerseits an vorbestimmter Stelle laufend gereinigt wird. Durch diese Filterungsmethode wird sichergestellt, dass die von der Maschine nach aussen abgegebene Abluft sauber ist. Damit entfällt ein entsprechender Niederschlag auf der Maschine, was den störungsfreien Betrieb ebenfalls unterstützt und ebenfalls den benötigten Wartungsaufwand vermindert.

Insgesamt ist aber festzuhalten, dass sich durch den genannten Stand der Technik die Produktionskosten nur unzulänglich senken lassen. Weitere Kostenfaktoren wie zB die Entsorgung der Spinn- oder Zwirnabfälle (Staub, Fasermaterial, Fadenabschnitte etc) und die durch den Betrieb der Maschine anfallenden Abwärme steigen mit erhöhter Produktionsgeschwindigkeit an und vermindern so die erzielten Vorteile.

Entsprechend ist es Aufgabe der vorliegenden Erfindung, solche Nachteile zu überwinden und eine Maschine zu schaffen, welche Abfälle derart aufbereitet, dass die nachgeschaltete technische Infrastruktur entlastet, mithin mit geringerem technischem Aufwand realisierbar ist.

Diese Aufgabe wird durch die kennzeichnenden Merkmale gemäss Anspruch 1 gelöst.

Durch die doppelte Führung der Sammelkanäle werden die aus dem Streckwerk stammenden Fasern einem Filter zugeführt, welcher von sonstigen Abfällen wie Faserabrieb oder beim Doffen angefallenen Fadenresten frei bleibt. Entsprechend können die Fasern dem Filter entnommen und der Wiederverwertung zugeführt werden, was einen verringerten Materialverbrauch und damit eine gesteigerte Produktivität zur Folge hat.

Ein bevorzugtes Ausführungsbeispiel weist zusätzlich die Merkmale von Anspruch 6 auf.

Durch die Kühlung wird die Wärmeleistung des Spinnantriebs an der Quelle erfasst und gesammthaft zur Peripherie der Maschine transportiert. Somit steht an der Peripherie ein Abluftstrom zur Verfügung, welcher direkt in die Klimatisierungseinrichtung des Spinnsaals abgegeben werden kann, was zur Folge hat, dass die Luft des Maschinensaals kaum mehr erwärmt wird. Damit ist nicht wie bisher die gesamte Luft des Spinnsaals umzuwälzen und zu kühlen, bevor sich diese um nur einige wenige Grade erwärmt hat; die Klimatisierungseinrichtung hat nun einen vergleichsweise geringen Volumenstrom markant erhöhter Temperatur zu verarbeiten, was erlaubt, die gesammte Anlage generell kleiner zu dimensionieren. Weiter können auch die die Wärmetauscher wegen des durch die grössere Temperaturdifferenz gegebenen besseren Wärmeübergangs verkleinert werden. Bei einer Klimatisierungeseinrichtung, welche pro Spinnmaschine leicht mehr als 30 kW, somit in Spinnsäälen von einigen Dutzend Maschinen beträchtliche Wärmemengen abzuführen hat, ergibt sich so eine erhebliche technische Vereinfachung der Anlage und eine entsprechende Reduktion der Investitions- und Betriebskosten, was die Kosten pro Einheit des hergestellten Guts wesentlich vermindert.

Weitere bevorzugte Ausführungsformen weisen Merkmale der abhängigen Ansprüche auf.

Ein Ausführungsbeispiel der Erfindung wird anhand der Zeichnungen näher erläutert.

Es zeigt:

Fig 1 rein schematisch einen Querschnitt durch eine Ringspinn- oder Zwirnmaschine mit doppelt geführten Abluftkanälen; und

Fig 2 rein schematisch eine Ansicht des Verlaufs der Abluft- bzw Kühlkanäle im Bereich der Spindelwellenmotoren.

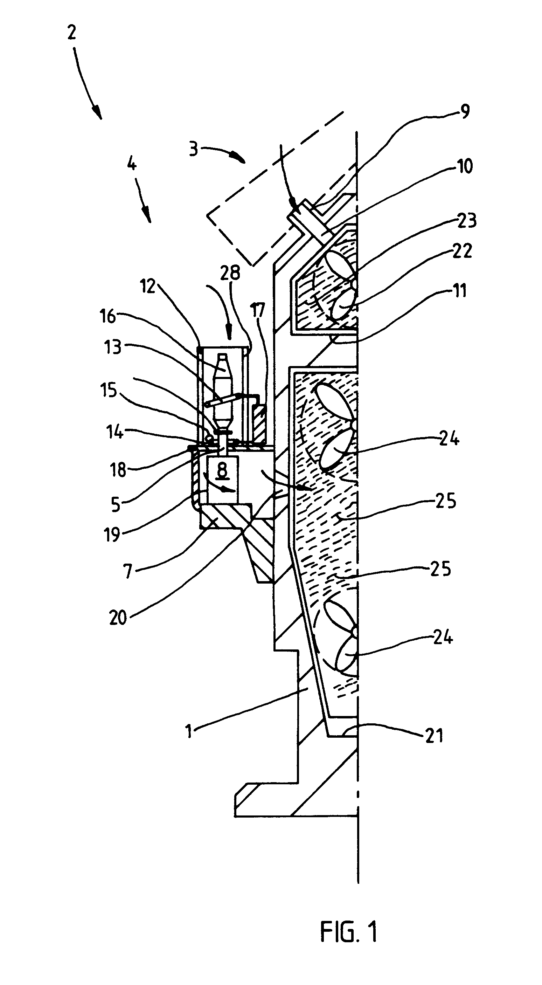

Fig 1 zeigt einen symmetrischen Querschnitt durch eine Ringspinn- oder Zwirnmaschine, zur Entlastung der Figur ist die symmetrisch ausgebildete rechte Hälfte der Maschine weggelassen.

Dargestellt ist ein Maschinenrahmen 1 mit einer Spinneinheit 2, welche aus einem im Umriss angedeuteten Streckwerk 3 und einer Fadenführungseinrichtung 4 besteht. Weiter dargestellt ist eine Spindelwelle 5 mit einer Unterwindkrone 6 und ein auf einer Lagerung 7 angeordneter Spindelwellenmotor 8.

Das Streckwerk 3 ist mit einer Luftabsaugleitung 9 versehen, welche über den Stutzen 10 in einen ersten, der Länge nach durch die Spinnoder Zwirnmaschine verlaufenden Sammelkanal 11 mündet.

Die Fadenführungseinrichtung 4 ist von einer Kapselung 12umschlossen; in der Kapselung 12 befinden sich ein Ballonbegrenzer 13, ein Einflanschring 14, ein an diesem laufenden Läufer 15 sowie ein auf der Spindelwelle 5 aufgesteckter Kops 16. Einflanschring 14 und Ballonbegrenzer 13 sind mit einer längs der Maschine verlaufenden Ringbank 17 verbunden.

Die Kapselung 12 ist durch ein Bodenstück 18 vom Spindelwellenantriebsmotor 8 getrennt; eine in der Figur nicht dargestellte Oeffnung im Bodenstück 18 schafft jedoch eine Verbindung zwischen der Fadenführungseinrichtung 4 und einem als Kühlluftkanal 19 ausgebildeten Raum, in dem Spindelwellenmotor 8 angeordnet ist. Der kühlluftkanal 19 mündet über eine Oefnung 20 in einen zweiten Sammelkanal 21.

Am Ende des längs der Ringspinn- oder Zwirnmaschine verlaufenden Sammelkanals 11 ist ein Ventilator 22 vorgesehen. Vor dem Ventilator befindet sich eine als Filter 23 ausgebildete Vorrichtung zum Entfernen von aus Fasern bestehendem Flug. Ebenso befindet sich am Ende des Sammelkanals 21 ein Ventilator 24 und davor eine als Filter 25 ausgebildetet Vorrichtung zum Entfernen von aus Staub, Faserabrieb und Fadenabschnitten bestehendem Flug.

Wird nun die Spinn- oder Zwirnmaschine in Betrieb genommen, werden gleichzeitig die Ventilatoren 22, 24 aktiviert, was zur Folge hat, dass Umgebungsluft einerseits durch den Bereich der Streckwerke 3 und andererseits durch die Kapselungen 12 angesaugt wird. Dabei werden durch den Betrieb der Streckwerke anfallende Fasern in den Sammelkanal 11 und durch den Betrieb der Fadenführungseinrichtungen 4 anfallender Staub und Faserabrieb sowie beim Doffen entstehende Fadenreste in den Sammelkanal 21 befördert. Entsprechend fallen im Filter 23 Fasern und im Filter 25 die Rückstände aus den Fadenführungseinrichtungen 4 an.

Während die Rückstände aus dem Filter 25 als Abfall entsorgt werden müssen, können die im Filter 23 gesammelten Fasern wieder verwendet, dh für einen weiteren Spinnprozess aufbereitet werden. Im Ergebnis vermindern sich so die Abfälle aus dem Spinn- oder Zwirnprozess, was die nachgeschaltete Infrastruktur entlastet, die Verwertung der Ausgangsmaterialien verbessert und so die Produktivität der Spinn- oder Zwirnmaschine erhöht.

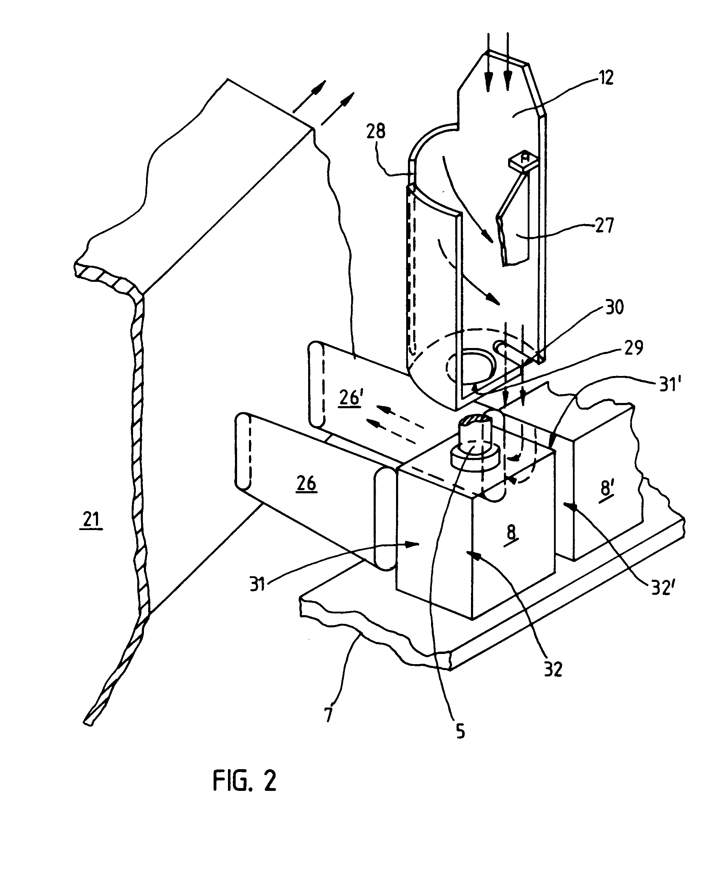

Fig 2 zeigt eine Ansicht einer bevorzugten Anordnung der Luftwege von der Kapselung 12 bis hin zum Sammelkanal 21. Zur Entlastung der Figur sind Verschalungsteile und die Fadenführungseinrichtung 4 weggelassen.

In der Figur sind eine Kapselung 12, auf der Lagerung 7 angeordnete Spindelwellenmotoren 8, 8' und in den Sammelkanal 21 mündende Kühlluftkanäle 26, 26' dargestellt.

Die Kapselung 12 ist zylinderförmig ausgebildet und, für automatisches Doffen, oben offen gehalten. Frontseitig ist eine Türe 27 angeordnet, welche den Zugang zu der Fadenführungseinrichtung 4 erlaubt. An der Rückseite befindet sich eine als Schlitz 28 ausgebildete Oeffnung durch welche die Träger für den Einflanschring 14 und den Ballonbegrenzer 13 hindurch ragen. In einem einstückig an der Kapselung 12 angeformten Bodenstück 29 ist eine Oeffnung 30 vorgesehen.

Die Spindelwellenmotoren 8, 8' besitzen ein rechteckiges Gehäuse und sind im Abstand voneinander auf der Lagerung 7 angeordnet; die dadurch gebildeten Zwischenräume 31, 31' sind nach oben durch die jeweilige Oeffnung 30 im Bodenstück 29 der Kapselung 12 und nach hinten durch die Kühlluftkanäle 26, 26' begrenzt. Damit bilden die Seitenwände der Spindelwellenmotoren 8, 8' Abschnitte der Kühlluftleitung zwischen der Kapselung 12 und dem Sammelkanal 21.

Im Betrieb des Ventilators 25 wird entsprechend den in der Figur eingetragenen Pfeilen Luft durch die Kapselung 12 angesaugt, wobei in ihr anfallender Staub, Fadenabrieb und Fadenabschnitte mitgeführt werden. Zugleich führt der an den Spindelwellenmotoren 8, 8' vorbeigeführte Luftstrom deren Abwärme ab, was dazu führt, dass die in den Sammelkanal 21 gelangende Luft um 15 bis 20 Grad wärmer ist als die die Maschine umgebende Luft.

Diese erwärmte Luft wird über einen in den Figuren nicht dargestellten Kühlluftstutzen an die Klimatisierungseinrichtung des Spinnsaals abgegeben. Damit erwärmt sich die Luft im Spinnsaal wesentlich langsamer, was zur Folge hat, dass diese nicht mehr wie bis anhin ca 30 mal pro Stunde, sondern nur noch ca 10 mal pro Stunde umgewälzt werden muss, um ein für das Bedienungspersonal geeignetes Arbeitsklima aufrecht zu erhalten. Weiter wird die mit der Abwärme belastete Kühlluft als vergleichsweise geringer, aber um 10 bis 25°C erhitzter Abluftstrom direkt der Klimatisierungseinrichtung zuzgeführt. Unter diesen Bedingungen sind die technischen Anforderungen an die Klimatisierungseinrichtung erheblich gesenkt, was zu verminderten Investitions- und Betriebskosten des Spinn- oder Zwirnprozesses führt.

Vorzugsweise werden die Frontseiten der Zwischenräume 31, 31' nicht verschalt, was zur Folge hat, dass durch die verbleibenden frontseitigen Oeffnungen 32,32' weitere Kühlluft angesugt wird. Dadurch fliesst einerseits ein mit Flug beladener Kühlluftstromanteil von der Oeffnung 30 her an den Spindelwellenmotoren vorbei, während andererseits ein weiterer Kühlluftstromanteil aus Frischluft durch die in Strömungsrichtung vor den Spindelwellenmotoren angeordneten Oeffnungen 32,32' angesogen wird. Damit muss durch die Kapselungen 12 mit ihrem durch den Kops bedingten erhöhten Strömungswiderstand nur die für das Absaugen der anfallenden Rückstände nötige Luft hindurchgeführt werden, so dass der Ventilator 25 mit der geringstmöglichen Leistung gefahren werden kann. Bei einem weiteren, nicht dargestellten Ausführungsbeispiel sind zwar Verschalungen vorgesehen, welche die Frontseiten der Spindelwellenmotoren abdecken, aber ihrerseits den Oeffnungen 32,32' entsprechende Lufteintrittsöffnungen aufweisen, so dass ebenfalls ein aus Frischluft bestehender Kühlluftstromanteil zumischbar ist.

Weiter besitzt der Sammelkanal 21 vorteilhafterweise die doppelte Kapazität, ca 10'000 m3, gegenüber derjenigen des Sammelkanals 11, was einer optimalen Aufteilung des im Innern des Rahmens 1 vorhandenen, für die Sammelkanäle verwendbaren Raums entspricht.

Bei einem weitern Ausführungsbeispiel werden die Kühlluftleitungen durch die Spindelwellenmotoren hindurchgeführt.

**Patentansprüche**

1. Ringspinn- oder Zwirnmaschine mit einem Rahmen, mit darin angeordneten Spinneinheiten, welche je ein Streckwerk, eine Fadenführungseinrichtung, bestehend aus einem Ballonbegrenzer, einem an einer Ringbank angeordneten Einflanschring und einem an diesem laufenden Läufer, sowie eine Spindelwelle aufweisen, und mit einer auf Streckwerke und Fadenführungseinrichtungen wirkenden Absaugvorrichtung für Fasern, Faserabrieb und Fadenreste, dadurch gekennzeichnet, dass die Absaugleitungen (9) von den Streckwerken her (3) in einen ersten Sammelkanal (11) und die Absaugleitungen (19) von den Fadenführungseinrichtungen (4) her in einen zweiten Sammelkanal (21) münden, derart, dass die in den Sammelkanälen (11, 21) gefasste Abluft getrennt geführt und mindestens einer der Abluftströme einer Vorrichtung zum Entfernen von Flug zuführbar ist.

2. Ringspinn- oder Zwirnmaschine nach Anspruch 1, dadurch gekennzeichnet, dass der erste Sammelkanal (11) eine als Filter (23) für wiederverwertbares Material, insbesondere Fasern, ausgebildete Vorrichtung zum Entfernen von Flug aufweist.

3. Rinspinn- oder Zwirnmaschine nach Anspruch 1 oder 2, dadurch gekennzeichnet, dass der zweite Sammelkanal (21) eine als Filter (25) für Faserabrieb und Fadenreste ausgebildete Vorrichtung zum Entfernen von Flug aufweist.

4. Ringspinn- oder Zwirnmaschine nach einem der Ansprüche 1 bis 3, dadurch gekennzeichnet, dass der erste Sammelkanal (11) oberhalb und/oder parallel zum zweiten Sammelkanal (21) der Länge nach durch die Spinn- oder Zwirnmaschine verläuft.

5. Ringspinn- oder Zwirnmaschine nach einem der Ansprüche 1 bis 4, dadurch gekennzeichnet, dass der zweite Sammelkanal (21) eine grössere, vorzugsweise verdoppelte Abluftkapazität aufweist.

6. Ringspinn- oder Zwirnmaschine nach einem der Ansprüche 1 bis 5, mit von Kapselungen (12) umschlossenen Fadenführungseinrichtungen (4), mit Einzelspindelwellenantrieb und mit einer über Absaugleitungen durch Abluftöffnungen (30) der Kapselungen wirkenden Absaugvorrichtung, dadurch gekennzeichnet, dass mit Abluftöffnungen (30) verbundene Absaugleitungen als zu Spindelwellenantriebsmotoren führende Kühlluftleitungen (19; 26, 26') ausgebildet sind, welche hinter den Spindelwellenmotoren (8, 8') in den Sammelkanal (21) münden.

7. Ringspinn- oder Zwirnmaschine nach Anspruch 6, dadurch gekennzeichnet, dass ein Bodenstück (29) zu den Seitenwänden der Kapselungen (12) mindestens eine Abluftöffnung (30) aufweist.

8. Ringspinn- oder Zwirnmaschine nach einem der Ansprüche 6 oder 7, dadurch gekennzeichnet, dass Spindelwellenmotoren (8, 8') mit durch sie hindurchführenden Kühlluftkanälen versehen sind.

9. Ringspinn- oder Zwirnmaschine nach einem der Ansprüche 6 bis 8, dadurch gekennzeichnet, dass benachbarte Spindelwellenmotoren (8, 8') Wandbereiche eines zwischen ihnen durchlaufenden und durch sie begrenzten Abschnitts der Kühlluftleitung bilden.

10. Ringspinn- oder Zwirnmaschine nach einem der Ansprüche 6 oder 7, dadurch gekennzeichnet, dass Spindelwellenmotoren in Kühlluft leitungen (19) angeordnet sind.

11. Ringspinn- oder Zwirnmaschine nach einem der Ansprüche 6 bis 10, dadurch gekennzeichnet, dass die Seitenwand der Kapselung (12) eine vertikal verlaufende, dem Hub der Ringbank entsprechend dimensionierte Oeffnung (28) für die Halterung des Ballonbegrenzers (13) aufweist.

**12.** Ringspinn- oder Zwirnmaschine nach einem der Ansprüche 6 bis 11, dadurch gekennzeichnet, dass in Strömungsrichtung des entsprechenden Kühlluftstromanteils vor dem jewiligen Spindelwellenmotor (8,8') eine Oeffnung im Kühlluftkanal zum Hinzumischen von Frischluft vorgesehen ist.

**13.** Spinnsaal mit einer Klimatisierungseinrichtung, gekennzeichnet durch mindestens eine über ihren mindesstens einen Kühlluftstutzen betriebsfähig mit der Klimatisierungseinrichtung verbundene Ringspinn- oder Zwirnmaschine nach einem der Ansprüche 1 bis 13.

**14.** Verfahren zum Kühlen einer Ringspinn- oder Zwirnmaschine nach einem der Ansprüche 1 bis 12, dadurch gekennzeichnet, dass die mit Abwärme von Ringspinn- oder Zwirnmaschinen beladene Kühlluft an den einzelnen Maschinen entnommen und der Klimatisierungseinrichtung eines Spinnsaals zugeleitet und nach der Kühlung wieder in den Spinnsaal abgegeben wird.

FIG. 1

FIG. 2

# EUROPÄISCHER RECHERCHENBERICHT

**EP 91 11 3419**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 412 545 (LIPPUNER) <br> * Spalte 4, Zeilen 47-54; Spalte 4, Zeile 74 - Spalte 5, Zeile 2; Figur 4 * | 1,3,13 | D 01 H 11/00 <br> D 01 H 5/66 |
| Y | | 6,8,10 | |
| Y | DE-A-2 244 668 (ZINSER) <br> * Anspruch 1 * | 6,8,10 | |
| A | DE-A-2 419 188 (LTG LUFTTECHNISCHE GmbH) <br> * Figuren * | 1 | |
| A | PATENT ABSTRACTS OF JAPAN, Band 11, Nr. 262 (C-442)[2709], 25. August 1987; <br> & JP-A-62 062 936 (NISSHINBO IND. INC.) 19-03-1987 <br> * Das ganze Dokument * | 1 | |
| A | FR-A-2 232 628 (SCHUBERT & SALZER) | | |
| A | DE-A-3 642 038 (ZINSER) | | |
| A,D | GB-A-982 604 (T.M.M. (RESEARCH)) | | |

| | |
|---|---|
| | **RECHERCHIERTE SACHGEBIETE (Int. Cl.5)** |
| | D 01 H |

Der vorliegende Recherchenbericht wurde für alle Patentansprüche erstellt

| Recherchenort | Abschlußdatum der Recherche | Prüfer |
|---|---|---|
| Den Haag | 13 November 91 | RAYBOULD B.D.J. |